# EUROPÄISCHE PATENTANMELDUNG

(11) **EP 1 028 089 A1**
(43) Veröffentlichungstag der Anmeldung: **16.08.2000**
(21) Anmeldenummer: 00102136.9
(22) Anmeldetag: 07.02.2000
(51) Int. Cl.: C01B 21/28

(54) **Ammoniakoxidation mit verminderter Bildung von N2O**

(30) Priorität: 11.02.1999 DE 19905753
(71) Anmelder: BASF AKTIENGESELLSCHAFT, 67056 Ludwigshafen (DE)
(72) Erfinder: Schumacher, Volker, Dr., 67227 Frankenthal (DE); Sibert, Gerhard, Dr., 67227 Frankenthal (DE)
(74) Vertreter: Isenbruck, Günter, Dr.

(57) **Zusammenfassung**

Eine Vorrichtung zur Verteilung eines bei der katalytischen Ammoniakoxidation aus einem Rohr (1, 8) ankommenden Ammoniak/Luft-Gemisches auf den Querschnitt eines Behälters (2), dessen Durchmesser ein Vielfaches des Rohrdurchmessers (D) beträgt, wobei das Eintrittsrohr (1) mit einem konzentrisch angeordneten Innenrohr (3) ausgestattet ist und im Kreisring zwischen Eintrittsrohr und Innenrohr Einbauten (4) zur Erzeugung eines Dralles angeordnet sind, wird zur Verhinderung der Bildung von N₂O bei der Ammoniakoxidation verwendet.

## Beschreibung

Die Erfindung betrifft die Verwendung bestimmter Vorrichtungen zur Verhinderung der Bildung von N₂O bei der Ammoniakoxidation.

Bei der großtechnischen Herstellung von Salpetersäure nach dem Ostwald-Verfahren wird Ammoniak an einem edelmetallhaltigen Katalysator mit Sauerstoff zu Stickoxiden umgesetzt, die anschließend in Wasser absorbiert werden. Dabei werden im ersten Schritt Ammoniak und Luft beziehungsweise Sauerstoff in einem Reaktor bei Temperaturen im Bereich von 800 bis 955°C an einem edelmetallhaltigen Katalysatornetz umgesetzt. Das Katalysatornetz enthält dabei als aktive Metalle in der Regel Platin und Rhodium. Zum Erreichen einer gleichmäßigen Anströmung des Katalysatornetzes werden verschiedene Einbauten wie Lochbleche, Gleichrichter oder andere Verteiler eingesetzt, vergleiche Ullmann's Encyclopedia of Industrial Chemistry 5^{th} Ed., Vol. A 17, 308 (1991). Derartige Verteiler sind beispielsweise in der EP-A 0 044 973 beschrieben. Bei der katalytischen Umsetzung wird Ammoniak zunächst zu Stickstoffmonoxid oxidiert, das anschließend mit Sauerstoff zu Stickstoffdioxid beziehungsweise Distickstoffetroxid weiteroxidiert wird. Das erhaltene Gasgemisch wird nach Abkühlen in einen Absorptionsturm geführt, in dem Stickstoffdioxid in Wasser absorbiert und zu Salpetersäure umgesetzt wird. Der Reaktor für die katalytische Verbrennung von Ammoniak enthält ferner hinter dem Katalysatornetz ein sogenanntes Rückgewinnungsnetz, um bei den hohen Umsetzungstemperaturen verdampfte Katalysatormetalle abzuscheiden und damit zurückzugewinnen. In Flußrichtung hinter dem Rückgewinnungsnetz ist ein Wärmetauscher angeordnet, mit dem das erhaltene Gasgemisch abgekühlt wird. Die Absorption wird außerhalb des eigentlichen Reaktors in einer getrennten Absorptionskolonne durchgeführt.

Die Verbrennung und die Absorption können auf einem einheitlichen Druckniveau durchgeführt werden. Dabei kann bei einem mittleren Druck von etwa 230 bis 600 kPa oder bei einem hohen Druck von etwa 700 bis 1100 kPa gearbeitet werden. Bei einem Verfahren mit zwei Druckstufen wird die Absorption bei einem höheren Druck als die Verbrennung durchgeführt. Bei der Verbrennung beträgt der Druck dabei etwa 400 bis 600 kPa und bei der Absorption etwa 900 bis 1400 kPa.

Eine Übersicht über das Ostwald-Verfahren findet sich beispielsweise in Ullman's Encyclopedia of Industrial Chemistry, 5. Auflage, Band A 17, Seiten 293 bis 339 (1991).

Bei der Verbrennung von Ammoniak wird neben Stickstoffmonoxid und Stickstoffdioxid beziehungsweise Distickstofftetroxid in der Regel neben N₂ auch N₂O (Distickstoffmonoxid) als Nebenprodukt gebildet. Im Gegensatz zu den anderen gebildeten Stickoxiden wird N₂O im Laufe des Absorptionsverfahrens nicht vom Wasser absorbiert. Wird keine weitere Stufe zur Entfernung von N₂O vorgesehen, so kann es in einer Konzentration von etwa 500 bis 3000 ppm im Abgas in die Umgebung gelangen.

Da N₂O als Treibhausgas gilt und am Abbau der Ozonschicht beteiligt ist, ist eine möglichst weitgehende Entfernung aus dem Abgas wünschenswert. Mehrere Verfahren zur Entfernung von N₂O aus Abgasströmen sind beschrieben.

Die Entfernung von N₂O aus Abgasströmen hat den Nachteil, daß häufig der im N₂O enthaltene Stickstoff durch die nachfolgende Aufarbeitung verloren geht.

Außerdem wird ein unerwünschter N₂O-Strom durch die Absorptionskolonne geführt, so daß das gewünschte Gasgemisch verdünnt wird. Vorteilhaft wäre eine weitgehende Unterdrückung der Bildung von N₂O bei der Ammoniakoxidation, so daß der Anteil an Wertprodukt steigt und kein Nebenproduktgas durch die Apparaturen geschleust werden muß.

Aufgabe der vorliegenden Erfindung ist die Verhinderung der Bildung von N₂O bei der Ammoniakoxidation.

Die Aufgabe wird erfindungsgemäß gelöst durch Verwendung einer Vorrichtung zur Verteilung eines bei der katalytischen Ammoniakoxidation aus einem Rohr ankommenden Ammoniak/Luft-Gemisches auf den Querschnitt eines Behälters, dessen Durchmesser ein Vielfaches des Rohrdurchmessers beträgt, wobei das Eintrittsrohr mit einem konzentrisch angeordneten Innenrohr ausgestattet ist und im Kreisring zwischen Eintrittsrohr und Innenrohr Einbauten zur Erzeugung eines Dralles angeordnet sind, zur Verhinderung der Bildung von N₂O bei der Ammoniakoxidation. Derartige Vorrichtungen sind beispielsweise aus der EP-A 0 044 973 bekannt.

Das Ammoniak/Luft-Gemisch gelangt im allgemeinen aus einem Rohr über eine Haube in einen zylindrischen Reaktorteil, in dessen oberem Ende die Platinnetze über den Gesamtquerschnitt des Behälters eingespannt sind. Die Haube besteht aus Erweiterungsteil - beispielsweise Kegel oder gewölbter Boden - und zylindrischem Übergangsteil.

Es ist bekannt, daß eine gleichmäßige Anströmung des Netzpakets für eine gute Ausbeute förderlich ist. Es wurde nunmehr gefunden, daß die Führung des Ammoniak/Luft-Gemisches in der erfindungsgemäß ausgelegten Vorrichtung zur Verhinderung der Bildung von N₂O bei der Ammoniakoxidation führt.

Es wurde gefunden, daß sich ein erheblicher Teil des N₂O nicht erst während der Reaktion von Ammoniak und Luft in den Platinnetzen, sondern bereits an heißen Oberflächen vor dem Platinnetz bildet, insbesondere an der Oberfläche von Einbauten, wenn diese durch die Strahlungswärme der glühenden Platinnetze auf Temperaturen von 300 bis 500°C erwärmt werden und dabei als katalytisch wirkende Fläche eine teilweise Oxidation von Ammoniak zu N₂O ermöglichen.

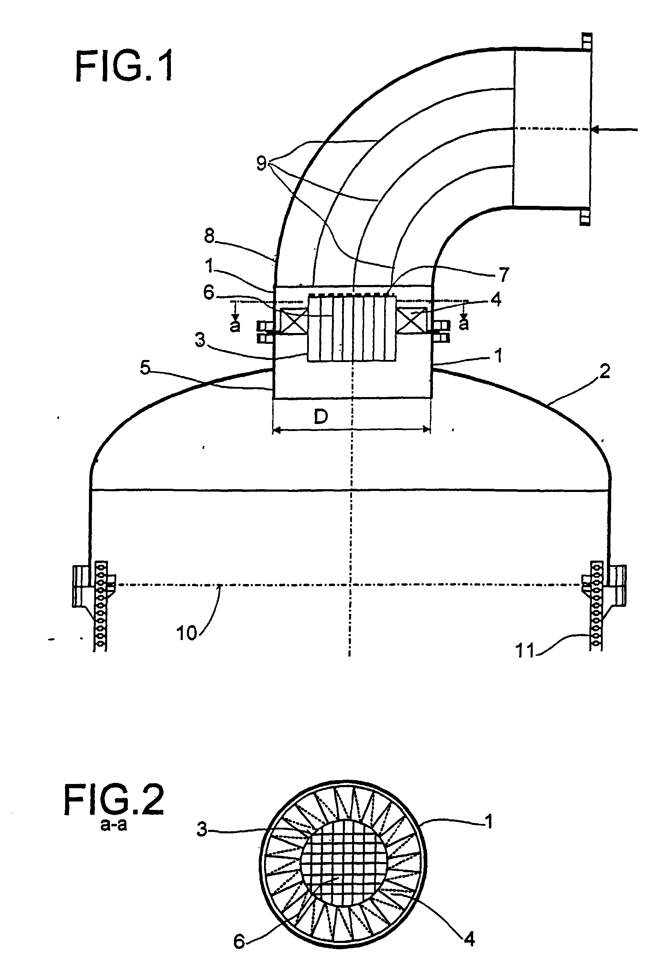

Ein Ausführungsbeispiel der Erfindung wird nachstehend anhand der Zeichnung näher erläutert:
Es zeigen Figur 1 im axialen Längsschnitt das Oberteil eines Ammoniak-Verbrennungsofens mit Einbau des erfindungsgemäßen Strömungsverteilers in schematischer Darstellung und
Figur 2 einen Querschnitt mit Draufsicht auf einen Strömungsverteiler an der in Figur 1 mit Schnitt a-a bezeichneten Stelle.

Die Gasströmung tritt in üblicher Weise über einen mit Leitblechen 9 versehenen Rohrkrümmer 8 und ein kurzes gerades Eintrittsrohr 1 in die Haube 2 und anschließend in den zylindrischen Reaktorteil ein. Am Haubenende sind die Pt-Netze 10 angebracht. Nach der Reaktion an den Pt-Netzen treten die heißen Gase in den mit der Haube über ein Flanschpaar verbundenen Abhitzeteil 11 ein, von dem in Figur 1 nur das obere Ende mit Beginn der Wandberohrung eingezeichnet ist, die zum thermischen Schutz des Behältermantels eingesetzt wird.

Das Konzept des neuen Strömungsverteilers beinhaltet, durch Einbauten lediglich im kalten Eintrittsrohr 1 die Strömung bis zum Netz hin gewissermaßen fernzusteuern. Zu diesem Zweck wird die Strömung im Eintrittsrohr durch ein konzentrisches Innenrohr 3 unterteilt und der Außenstrom durch Einbauten 4 mit einem Drehimpuls versehen. Die Kombination von verdralltem Außenstrom mit axialer Kernströmung bewirkt, daß die Strömung sich an der Haubenwand stabil anlegt, ohne daß auf der Reaktorachse ein Rückströmgebiet ausgebildet wird.

Es hat sich als vorteilhaft erwiesen, zur Verdrallung des Außenstromes in den Kreisring zwischen Eintrittsrohr und Innenrohr einen Kranz von Leitschaufeln 4 zu legen.

Der Anstellwinkel der Leitschaufeln gegenüber der Anströmrichtung sollte je nach Öffnungswinkel der Strömung 30 bis 55° betragen. Um ein einseitiges Anlegen der Strömung an die Haubenwand mit Rückströmung auf der Haubengegenseite zu vermeiden, ist es zweckmäßig, daß das Eintrittsrohr unter Bildung einer Abrißkante 5 in den Behälter hineinragt. Anstatt die Kernströmung axial mit einem in Achsrichtung verlaufenden Wabenbündel gleichzurichten, kann man sie zur Stabilisierung alternativ auch mit einem leichten Drall versehen. Die dazu im Kernrohr statt der Gleichrichterwaben einzusetzenden Leitschaufeln dürfen dann nur einen Anstellwinkel von maximal 15° aufweisen, um eine Rückströmung auf der Reaktorachse zu vermeiden. Um das Verhältnis der Gasströme im Innenrohr und im Kreisring aufeinander abzustimmen, ist es notwendig, am Eintrittsende des Innenrohrs einen Strömungswiderstand, zum Beispiel ein Sieb, anzubringen.

In einer weiteren vorteilhaften Ausgestaltung der Erfindung wird für das Verhältnis der Durchmesser Innenrohr zu Eintrittsrohr (D) 0,4 bis 0,7 gewählt. Der Abstand vom Ende des Innenrohrs bis zum Ende des Eintrittsrohres sollte das 0,1- bis 0,5-fache des Eintrittsrohrdurchmessers (D) betragen. Dadurch wird vor dem Eintritt in die Haube eine Verzahnung von Kern- und Außenströmung bewirkt.

Bei der katalytischen Ammoniakoxidation bestehen die Vorteile des Einbaus des erfindungsgemäßen Strömungsverteilers darin, daß durch gleichmäßige und rückströmungsfreie Verteilung des Reaktionsgases auf die Platinnetze die Ausbeute gesteigert und die Bildung von N₂O verhindert wird. Ein weiterer Vorteil liegt darin, daß durch Verzicht auf Einbauten im Haubenteil einerseits und Ausschaltung von Rückströmung andererseits Betriebsstörungen durch Rückzündungen vermieden werden.

Die Erfindung wird durch die folgenden Beispiele näher erläutert.

### Beispiel 1 (Vergleich):

Ein technischer Oxidationsreaktor mit einem Netzdurchmesser von 3 Metern wird drucklos mit einer Belastung von 100 kg/h Ammoniak/m² Netzfläche in einem Gasstrom von 8.000 Nm³/h bei einer Netztemperatur von 890°C betrieben. Die Anströmung der ammoniakhaltigen Gase erfolgt über ein Zuleitrohr von 0,8 m Durchmesser, das mit einem Konus von 1,1 m Höhe auf den Netzdurchmesser von 3 m erweitert wird. Zur Gleichverteilung des Gases sind 700 mm oberhalb der Platinnetze 2 Lochbleche mit je 7500 Löchern von je 8 mm Durchmesser eingebaut. Bei einer Oxidationsreaktion des Ammoniaks bildet sich das Hauptprodukt NO in einer Ausbeute von ca. 97 %; das Nebenprodukt ist im abströmenden Gasstrom N₂O in einer Konzentration von 800 bis 1000 ppm/v enthalten.

### Beispiel 2 (erfindungsgemäß):

Aus dem in Beispiel 1 betriebenen Oxidationsreaktor wurden die zur Gleichverteilung der Gase eingesetzten Lochbleche ausgebaut und das Anströmrohr unmittelbar vor der Erweiterung des Konus mit der erfindungsgemäßen Vorrichtung zur Gleichverteilung der Gase ausgerüstet.

Bei den gleichen Betriebsbedingungen wie in Beispiel 1 ergibt sich im abströmenden Gas ein N₂O-Gehalt von 500 bis 600 ppm/v.

## Patentansprüche

1. Verwendung einer Vorrichtung zur Verteilung eines bei der katalytischen Ammoniakoxidation aus einem Rohr ankommenden Ammoniak/Luft-Gemisches auf den Querschnitt eines Behälters, dessen Durchmesser ein Vielfaches des Rohrdurchmessers beträgt, wobei das Eintrittsrohr mit einem konzentrisch angeordneten Innenrohr ausgestattet ist und im Kreisring zwischen Eintrittsrohr und Innenrohr Einbauten zur Erzeugung eines Dralles angeordnet sind, zur Verhinderung der Bildung von N₂O bei der Ammoniakoxidation.

2. Verwendung nach Anspruch 1, dadurch gekennzeichnet, daß in der Vorrichtung die im Kreisring zwischen Eintrittsrohr und Innenrohr angebrachten Einbauten aus einem Kranz von Leitschaufeln bestehen.

3. Verwendung nach Anspruch 1 oder 2, dadurch gekennzeichnet, daß in der Vorrichtung der Anstellwinkel der Leitschaufeln gegenüber der Strömungsrichtung 30 bis 55° beträgt.

4. Verwendung nach einem der Ansprüche 1 bis 3, dadurch gekennzeichnet, daß in der Vorrichtung das Eintrittsrohr unter Bildung einer Abrißkante in den Behälter hineinragt.

5. Verwendung nach einem der Ansprüche 1 bis 4, dadurch gekennzeichnet, daß in der Vorrichtung das konzentrisch angeordnete Innenrohr mit einem in Achsrichtung verlaufenden Wabenbündel oder Leitschaufeln, deren Anstellwinkel maximal 15° betragen, versehen ist.

6. Verwendung nach einem der Ansprüche 1 bis 5, dadurch gekennzeichnet, daß in der Vorrichtung am Eintrittsende des Innenrohres ein Strömungswiderstand angebracht ist.

7. Verwendung nach Anspruch 6, dadurch gekennzeichnet, daß der Strömungswiderstand in Form eines Siebes angebracht ist.

8. Verwendung nach einem der Ansprüche 1 bis 7, dadurch gekennzeichnet, daß in der Vorrichtung das Verhältnis der Durchmesser von Innenrohr zu Eintrittsrohr 0,4 bis 0,7 beträgt.

9. Verwendung nach einem der Ansprüche 1 bis 7, dadurch gekennzeichnet, daß in der Vorrichtung in Strömungsrichtung gesehen der Abstand vom Ende des Innenrohres bis zum Ende des Eintrittsrohres das 0,1- bis 0,5-fache des Eintrittsrohrdurchmessers beträgt.
